# EUROPEAN PATENT APPLICATION

(11) **EP 3 348 359 A1**
(43) Date of publication of application: **18.07.2018**
(21) Application number: 16843948.7
(22) Date of filing: 07.09.2016
(51) Int. Cl.: B25J 11/00, B25J 19/06

(54) **ROBOT**

(30) Priority: 08.09.2015 JP 2015176866
(71) Applicant: Kawasaki Jukogyo Kabushiki Kaisha, Kobe-shi, Hyogo 650-8670 (JP)
(72) Inventor: WAKITA, Daisuke, Akashi-shi, Hyogo 673-8666 (JP)
(74) Representative: Müller-Boré & Partner Patentanwälte PartG mbB
(86) International application number: PCT/JP2016/004083
(87) International publication number: WO 2017/043081

(57) **Abstract**

Included are: a plurality of arm mechanisms (3) that couple between a base (2) and a bracket (4), each arm mechanism including an arm (18) whose proximal end portion is swingably coupled to the base, a pair of links (21, 22) parallel to each other, the pair of links being disposed such that a proximal-end-side link sandwiched portion (20) of the arm mechanism is rotatably sandwiched between proximal end portions of the respective links, and such that a distal-end-side link sandwiched portion (29) of the bracket (4) is rotatably sandwiched between distal end portions of the respective links, and an urging unit (27) connecting between the pair of links in a bridging manner and configured to urge the pair of links toward each other; a link dislocation detection unit (5) mounted to the pair of links; and a controller (61) configured to control an operation of the arm. The link dislocation detection unit includes a detector (41b) mounted to a middle portion of one of the pair of links, the detector being configured to detect that the middle portion of the one of the pair of links and a middle portion of the other one of the pair of links have become spaced apart from each other by more than a predetermined distance.

## Description

### Technical Field

The present invention relates to a robot.

### Background Art

Conventionally, there is a known parallel mechanism capable of detecting dislocation of a ball joint that couples an arm or the like in a swingable manner (see Patent Literature 1, for example).

An arm body forming the parallel mechanism includes: a first arm; a second arm including a pair of rods; ball joints that couple one ends of the rods and the first arm; and ball joints that couple the other ends of the rods and a bracket. Each ball joint includes: a ball stud including a spherical head portion; a socket that holds the spherical head portion in a swingable and rotatable manner; and an electrically-conductive member interposed between the spherical head portion and the socket. A detection device detects dislocation of the ball joint(s) based on whether or not a collective detection circuit is electrically continuous. In the collective detection circuit, four unit detection circuits are connected together in series, each unit detection circuit being formed by the ball stud, the electrically-conductive member, and the socket.

### Citation List

### Patent Literature

PTL 1: Japanese Laid-Open Patent Application Publication No. 2009-248289

### Summary of Invention

### Technical Problem

However, in the parallel mechanism disclosed in Patent Literature 1, it is necessary that a circuit for detecting joint dislocation be formed for each ball joint. This results in a complex configuration and lowered reliability.

### Solution to Problem

In order to solve the above-described problems, a robot according to one aspect of the present invention includes: a base; a bracket that includes a plurality of distal-end-side link sandwiched portions and to which an end effector is attached; a plurality of arm mechanisms that couple between the base and the bracket, each arm mechanism including an arm whose proximal end portion is swingably coupled to the base and whose distal end portion includes a proximal-end-side link sandwiched portion, a pair of links parallel to each other, the pair of links being disposed such that the proximal-end-side link sandwiched portion is rotatably sandwiched between proximal end portions of the respective links, and such that a corresponding one of the distal-end-side link sandwiched portions is rotatably sandwiched between distal end portions of the respective links, and an urging unit connecting between the pair of links in a bridging manner and configured to urge the pair of links toward each other; a link dislocation detection unit mounted to the pair of links; and a controller configured to control an operation of the arm. The proximal-end-side link sandwiched portion and the proximal end portions of the pair of links form a proximal end joint that couples the pair of links to the arm in a manner to allow the pair of links to swing. The distal end portions of the pair of links and the distal-end-side link sandwiched portion form a distal end joint that couples the pair of links to the bracket in a manner to allow the pair of links to swing. The link dislocation detection unit includes a detector mounted to a middle portion of one of the pair of links, the detector being configured to detect that the middle portion of the one of the pair of links and a middle portion of the other one of the pair of links have become spaced apart from each other by more than a predetermined distance.

According to the above configuration, by the detector of one link dislocation detection unit, an abnormality in the assembled state of the proximal end joint and the distal end joint of the corresponding arm mechanism can be detected. This makes it possible to simplify the configuration of the robot and obtain high reliability.

The link dislocation detection unit may be configured to detect that the detector has deviated from a predetermined movement trajectory that the detector draws relative to the other one of the pair of links when the pair of links in a normally assembled state swings on a plane that passes through the pair of links.

According to the above configuration, an abnormality in the assembled state of the proximal end joint and the distal end joint can be detected accurately.

The link dislocation detection unit may further include: a light emitter configured to emit light; and a reflector mounted to the other one of the pair of links and configured to reflect the light emitted by the light emitter. The reflector may include an end edge that extends along the predetermined trajectory on one side of the predetermined trajectory, the one side being shifted from the predetermined trajectory in a direction from the other one of the pair of links toward the one of the pair of links. The detector may be configured to receive the light that is emitted by the light emitter and reflected by the reflector.

The above configuration makes it possible to detect that the middle portions of the pair of links have become spaced apart from each other by more than the predetermined distance based on the detector's movement from the predetermined trajectory to the one side that is shifted from the predetermined trajectory in a direction from the other one of the pair of links toward the one of the pair of links.

The controller may change motion of the arm mechanism, or bring the arm mechanism to a stop, when the detector detects that the middle portions of the pair of links have become spaced apart from each other by more than the predetermined distance.

According to the above configuration, when an abnormality has occurred in the assembled state of the proximal end joint and the distal end joint, the motion of the robot can be changed, or the robot can be brought to a stop.

### Advantageous Effects of Invention

The present invention provides an advantageous effect of being able to detect, by the detector of one link dislocation detection unit, an abnormality in the assembled state of the proximal end joint and the distal end joint of the corresponding arm mechanism.

### Brief Description of Drawings

Fig. 1 is a front view showing a configuration example of a robot according to one embodiment of the present invention.
Fig. 2 shows a configuration example of each arm mechanism of the robot of Fig. 1.
Fig. 3A shows a configuration example of a proximal end joint of each arm mechanism of the robot of Fig. 1.
Fig. 3B shows a configuration example of a distal end joint of each arm mechanism of the robot of Fig. 1.
Fig. 4 is a bottom view schematically showing a configuration example of a bracket of the robot of Fig. 1.
Fig. 5 shows a configuration example of a link dislocation detection unit of the robot of Fig. 1.
Fig. 6 shows a configuration example of the link dislocation detection unit of the robot of Fig. 1, and shows a view of the link dislocation detection unit as seen in a direction in which a first link and a second link extend.
Fig. 7A shows a configuration example of each arm mechanism of the robot of Fig. 1, and shows a state where a parallel link unit is swung.
Fig. 7B shows a configuration example of each arm mechanism of the robot of Fig. 1, and shows a state where the parallel link unit is swung.
Fig. 8 shows a configuration example of each arm mechanism of the robot of Fig. 1, and shows a state where the first link and the second link of the parallel link unit have moved away from each other.
Fig. 9 shows a configuration example of the link dislocation detection unit of the robot of Fig. 1, and shows a state where the first link and the second link of the parallel link unit have moved away from each other.
Fig. 10 is a block diagram schematically showing a configuration example of a control system of the robot of Fig. 1.
Fig. 11 shows a variation of the link dislocation detection unit of the robot according to the embodiment of the present invention.
Fig. 12 shows a variation of the link dislocation detection unit of the robot according to the embodiment of the present invention.

### Description of Embodiments

Hereinafter, one embodiment of the present invention is described with reference to the drawings. It should be noted that the present invention is not limited by the present embodiment. In the drawings, the same or corresponding elements are denoted by the same reference signs, and repeating the same descriptions is avoided below.

### [Delta Robot]

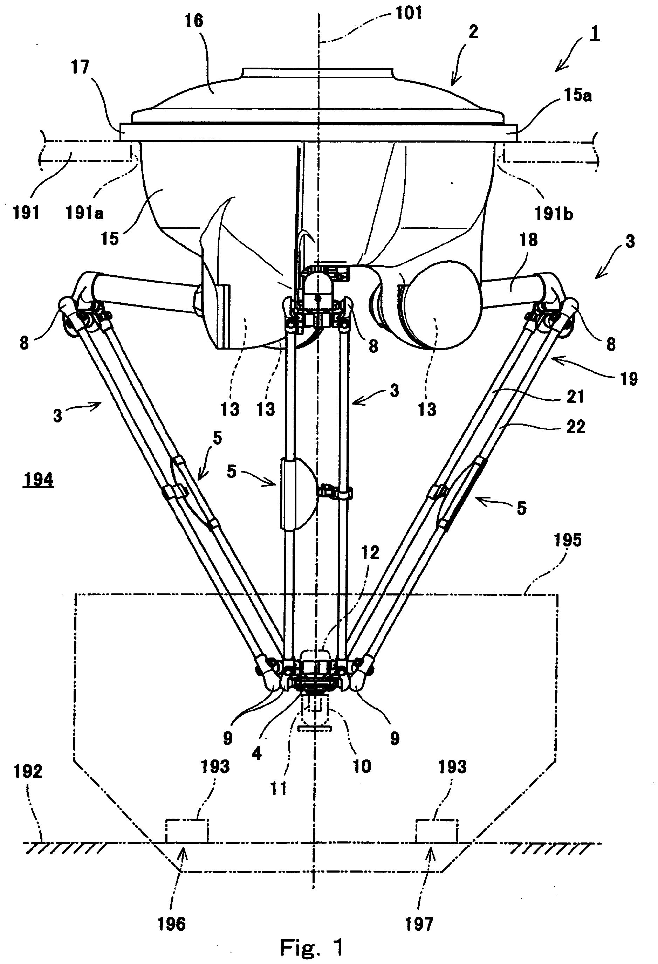

Fig. 1 is a front view showing a configuration example of a robot 1.

The robot 1 shown in Fig. 1 is a so-called delta robot that is used, for example, as a picking robot in a manufacturing facility for manufacturing food products, chemical products, cosmetic products, etc. In such a manufacturing facility, a placing stand 192, on which a workpiece 193 is placed, is disposed below a mount 191, on which the robot 1 is installed. When the robot 1 is installed on the mount 191, an essential part of the robot 1 is positioned in a work space 194, which is formed between the mount 191 and the placing stand 192. The robot 1 is disposed such that at least part of the placing stand 192 is positioned within a movable range 195 of the robot 1. The robot 1 is capable of holding the workpiece 193 placed at one position 196 on the placing stand 192, moving the held workpiece 193, and precisely placing the workpiece 193 at another position 197 on the placing stand 192.

The robot 1 includes a base 2. The base 2 includes a bucket 15 and a cover 16, which covers the opening of the bucket 15 from above. The bucket 15 includes an upper edge portion 15a surrounding the opening, and the upper edge portion 15a is provided with a plurality of ribs 17 protruding horizontally. The ribs 17 are supported by a peripheral edge portion 191b of a mounting opening 191a formed in the mount 191. The base 2 is fixed to the mount 191, for example, by fixing the ribs 17 to the peripheral edge portion 191b with screws.

It should be noted that Fig. 1 shows an example where the lower surfaces of the ribs 17 are in contact with the upper surface of the peripheral edge portion 191b, and the ribs 17 are held by the peripheral edge portion 191b, to which the ribs 17 are fixed by screws. However, as an alternative, the upper surfaces of the ribs 17 may be in contact with the lower surface of the peripheral edge portion 191b, and the ribs 17 may be held by the peripheral edge portion 191b, to which the ribs 17 are fixed by screws.

When the base 2 is fixed to the mount 191, a part of the robot 1 below the upper edge portion 15a is disposed in the work space 194 in such a manner that the part of the robot 1 is suspended from the mount 191. The lower part of the bucket 15 is coupled to a single bracket 4 via a plurality of arm mechanisms 3. When seen in a plan view, the proximal end portions of the plurality of respective arm mechanisms 3 are arranged at regular intervals in a circumferential direction. To be more specific, when the robot 1 is in its reference orientation, the plurality of arm mechanisms 3 are arranged such that they are spaced apart from each other at regular intervals and rotationally symmetrical with respect to a predetermined central axis 101 (in this example, the central axis of the bucket 15). In the mode illustrated in the present embodiment, three arm mechanisms 3 are provided. The three arm mechanisms 3 are arranged such that they are spaced apart from each other at regular intervals of 120 degrees and rotationally symmetrical with respect to the central axis 101. Also, in the present embodiment, the robot 1 is set such that the central axis 101 extends in the vertical direction. However, the present embodiment is not thus limited. The robot 1 may be set such that the central axis 101 is inclined relative to the vertical direction.

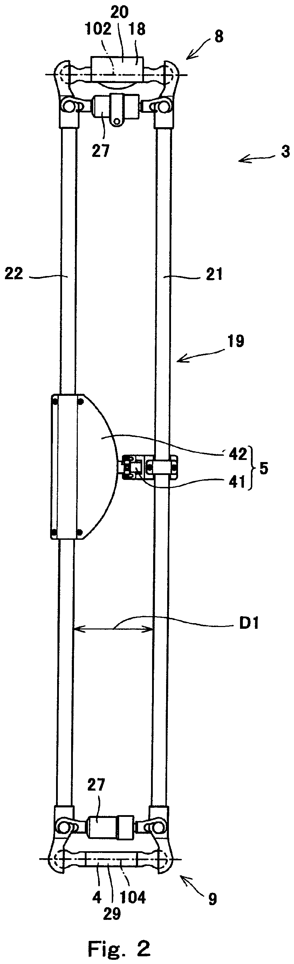

Fig. 2 shows a configuration example of each arm mechanism 3 of the robot 1.

As shown in Fig. 1 and Fig. 2, each arm mechanism 3 includes: an arm 18; and a parallel link unit 19 including a first link 21 and a second link 22. The arm 18 is, at its proximal end portion, swingably coupled to the lower part of the bucket 15. Swing support shafts of the respective arms 18 are positioned in the same plane that is orthogonal to the central axis 101. That is, in the present embodiment, the swing support shafts of the respective arms 18 are positioned in the same horizontal plane. The first link 21 is, at its proximal end portion, swingably coupled to the distal end portion of the arm 18, and also, at its distal end portion, swingably coupled to the bracket 4. The second link 22 extends parallel to the first link 21, and is disposed at the same position as the first link 21 in the direction in which the predetermined central axis 101 extends. The second link 22 is, at its proximal end portion, swingably coupled to the distal end portion of the arm 18, and also, at its distal end portion, swingably coupled to the bracket 4. The first link 21 and the second link 22 form a pair of links.

A proximal-end-side link sandwiched portion 20 and the proximal end portion of the parallel link unit 19 form a proximal end joint 8, which couples the parallel link unit 19 to the arm 18 in a manner to allow the parallel link unit 19 to swing in any direction. A distal-end-side link sandwiched portion 29 and the distal end portion of the parallel link unit 19 form a distal end joint 9, which couples the parallel link unit 19 to the bracket 4 in a manner to allow the parallel link unit 19 to swing in any direction.

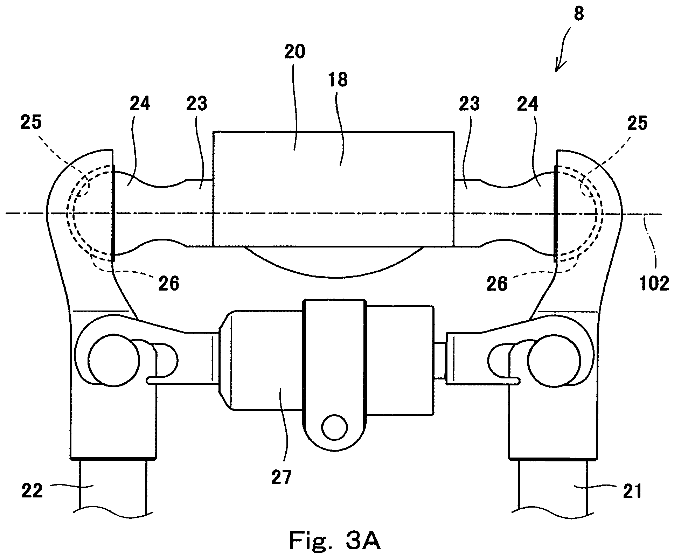

Fig. 3A shows a configuration example of the proximal end joint 8.

As shown in Fig. 1, Fig. 2, and Fig. 3A, the arm 18 includes, at its distal end portion, the proximal-end-side link sandwiched portion 20, which includes a pair of joint portions 23. An axis 102 of the pair of joint portions 23 extends from the distal end portion of the arm 18 in a tangential direction of a circle that centers on the central axis 101, and the joint portions 23 extend from the distal end portion of the arm 18 outwardly in opposite directions to each other. The distal end portion of each joint portion 23 forms a spherical free end. The spherical free end of each joint portion 23 forms a ball portion 24.

A recess 25, which is recessed in a direction orthogonal to the direction in which the first link 21 extends, is formed in the proximal end portion of the first link 21. Similarly, a recess 25, which is recessed in a direction orthogonal to the direction in which the second link 22 extends, is formed in the proximal end portion of the second link 22. A bowl-shaped socket 26 is detachably attached to each recess 25. The inner peripheral surface of the socket 26 forms a substantially hemispherical surface. The shape of the inner peripheral surface of the socket 26 is substantially the same as the shape of the outer peripheral surface of the ball portion 24. The sockets 26 and the ball portions 24 are fitted together in such a manner that the ball portions 24 of the pair of joint portions 23 are sandwiched between the sockets 26 of the first and the second links 21 and 22. In this manner, the outer peripheral surface of each ball portion 24 and the inner peripheral surface of the corresponding socket 26 form a spherical kinematic pair, and thereby the first link 21 and the second link 22 are swingably coupled to the arm 18, such that each of the first and the second links 21 and 22 has at least two degrees of freedom relative to the arm 18.

An urging unit 27 connects between the proximal end portion of the first link 21 and the proximal end portion of the second link 22 in a bridging manner. The urging unit 27 is configured to urge the first link 21 and the second link 22 toward each other, thereby keeping a state where the proximal-end-side link sandwiched portion 20 is clamped between the links 21 and 22. In this manner, detachment of the first and the second links 21 and 22 from the arm 18 is prevented.

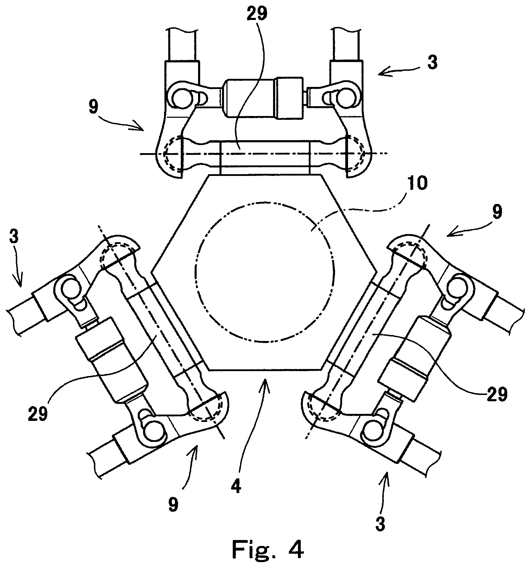

Fig. 4 is a bottom view schematically showing a configuration example of the bracket 4.

As shown in Fig. 1, Fig. 2, and Fig. 4, the bracket 4 is flat plate-shaped, and is provided in such an orientation that the bracket 4 extends on a plane orthogonal to the central axis 101, i.e., provided in a horizontal orientation. The bracket 4 includes a plurality of distal-end-side link sandwiched portions 29. Each distal-end-side link sandwiched portion 29 is, for example, formed on an outer peripheral edge portion of the bracket 4. The plurality of distal-end-side link sandwiched portions 29 are arranged such that they are spaced apart from each other at regular intervals and rotationally symmetrical with respect to an axis extending parallel to the central axis 101. In the mode illustrated in the present embodiment, three distal-end-side link sandwiched portions 29 are provided. The three distal-end-side link sandwiched portions 29 are arranged such that they are spaced apart from each other at regular intervals of 120 degrees and rotationally symmetrical with respect to the axis extending parallel to the central axis 101.

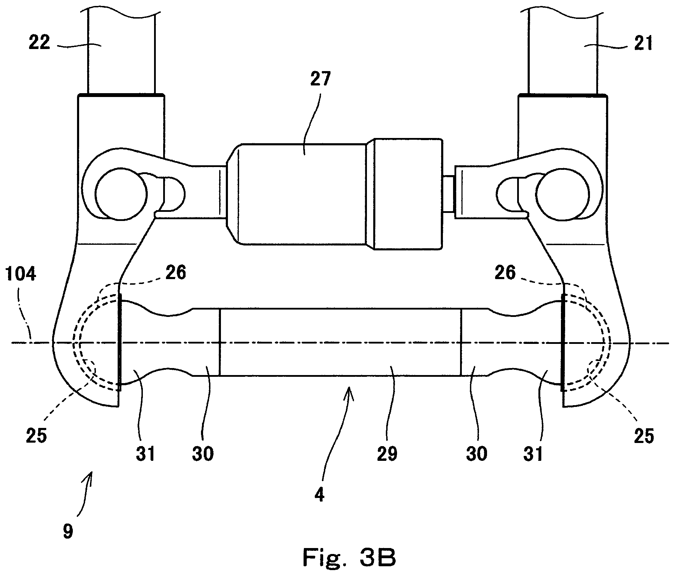

Fig. 3B shows a configuration example of the distal end joint 9.

As shown in Fig. 3B, each distal-end-side link sandwiched portion 29 includes a pair of joint portions 30. An axis 104 of the pair of joint portions 30 extends from the outer peripheral edge portion of the bracket 4 in a tangential direction of a circle that centers on the central axis 101, and the joint portions 30 extend from the outer peripheral edge portion of the bracket 4 outwardly in opposite directions to each other. That is, the axis 104 is parallel to the axis 102 in the assembled state. The distal end portion of each joint portion 30 forms a spherical free end. The spherical free end of each joint portion 30 forms a ball portion 31.

The distal end portion of each of the first link 21 and the second link 22 is configured in the same manner as the proximal end portion thereof. The sockets 26 and the ball portions 31 are fitted together in such a manner that the ball portions 31 of the pair of joint portions 30 are sandwiched between the sockets 26 of the first and the second links 21 and 22. In this manner, each ball portion 31 and the corresponding socket 26 form a spherical kinematic pair, and thereby the first link 21 and the second link 22 are swingably coupled to the bracket 4, such that each of the first and the second links 21 and 22 has at least two degrees of freedom relative to the bracket 4.

As described above, each of the proximal end joint 8 and the distal end joint 9 is configured as a ball joint. The proximal end portion of the first link 21 and the proximal end portion of the second link 22 are disposed such that the proximal-end-side link sandwiched portion 20 is rotatably sandwiched therebetween, and the distal end portion of the first link 21 and the distal end portion of the second link 22 are disposed such that the corresponding distal-end-side link sandwiched portion 29 provided on the bracket 4 is rotatably sandwiched therebetween.

Also between the distal end portion of the first link 21 and the distal end portion of the second link 22, the urging unit 27 as described above is disposed, connecting them in a bridging manner. By means of the urging unit 27, the links 21 and 22 are configured to keep a state where the distal-end-side link sandwiched portion 29 is sandwiched therebetween, and thereby detachment of the links 21 and 22 from the bracket 4 is prevented. As thus described, the parallel link unit 19 is configured as a parallel link.

According to the above-described configuration, the bracket 4 is coupled to the base 2 via a plurality of parallel links, each of which includes the first and the second links 21 and 22. As shown in Fig. 1, the lower part of the base 2 is provided with arm actuators 13, each of which is configured to swing the proximal end portion of a corresponding one of the arms 18 relative to the base 2. When the arms 18 swing in accordance with the operation of the corresponding arm actuators 13, the bracket 4 moves within the movable range 195 to a predetermined position defined by the plurality of arm mechanisms 3. At the time, the orientation of the bracket 4 relative to the base 2 is restricted (defined) by the plurality of parallel links, and the orientation of the bracket 4 in a planar direction orthogonal to the predetermined central axis 101 is kept.

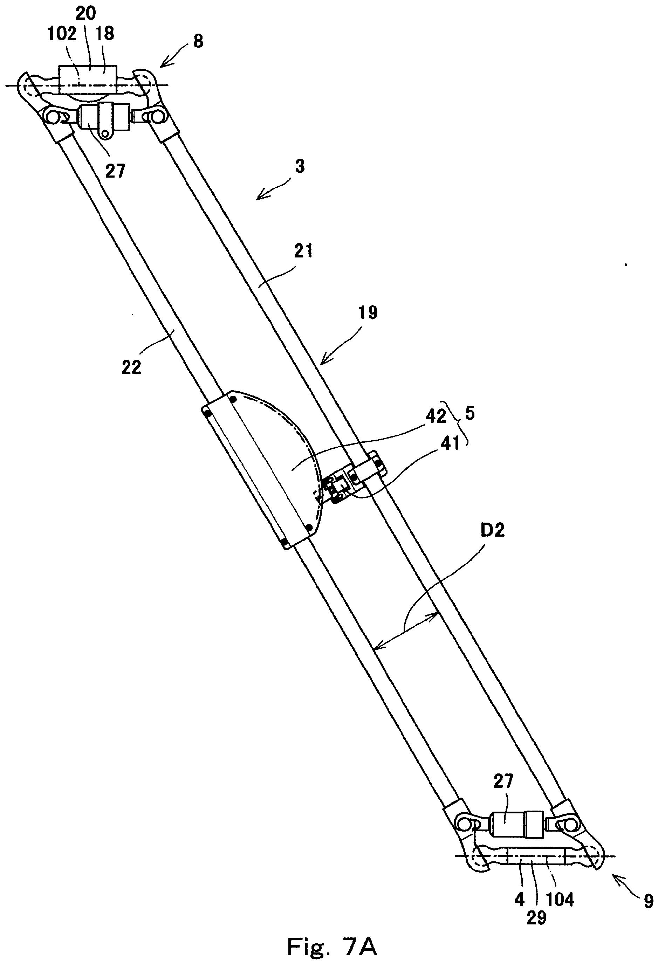

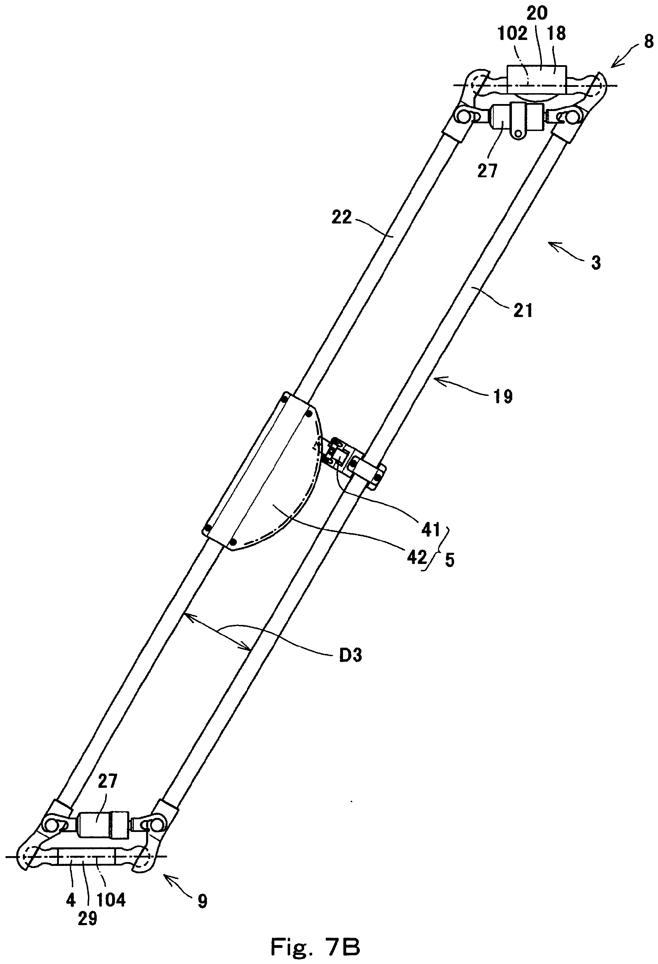

When the bracket 4 moves within the movable range 195 to the predetermined position defined by the plurality of arm mechanisms 3, the inclination angle of each parallel link unit 19 relative to the central axis 101 changes. Also, as show in Fig. 7A and Fig. 7B, the first link 21 and the second link 22 swing on a plane that passes through the first link 21 and the second link 22. As a result, as seen in a direction normal to the plane passing through the first link 21 and the second link 22, the distance between the first link 21 and the second link 22 in a direction orthogonal to the extending direction of the first link 21 and the second link 22 changes. Specifically, when the first link 21 and the second link 22 are in such an orientation that they are orthogonal to the pair of joint portions 23 and the pair of joint portions 30, the distance D1 between the first link 21 and the second link 22 in the direction orthogonal to the first link 21 and the second link 22 is at a maximum. Then, as the first link 21 and the second link 22 swing from this orientation, the distance between the first link 21 and the second link 22 in the direction orthogonal to the first link 21 and the second link 22 decreases. That is, distances D2 and D3 shown in Fig. 7A and Fig. 7B are less than the distance D1.

As shown in Fig. 1, an end effector 10 for performing the work of picking up the workpiece 193 is detachably attached to the lower surface side of the bracket 4. A rotary shaft 11, which extends parallel to the extending direction of the central axis 101, extends downward from the lower surface of the bracket 4. The end effector 10 is attached to the bracket 4 such that the end effector 10 rotates together with the rotary shaft 11. An end actuator 12 configured to drive the rotary shaft 11 is disposed on the upper surface side of the bracket 4. This improves the work efficiency of the robot 1.

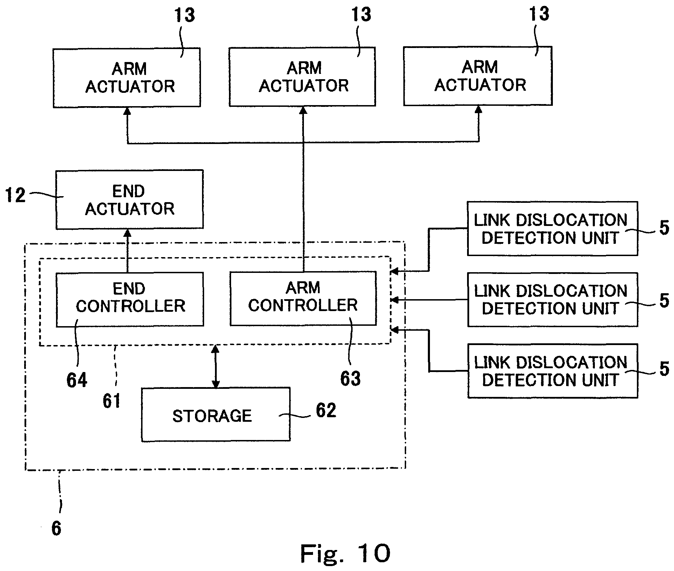

The end actuator 12 is a servomotor, for example. The end actuator 12 is connected, by an unshown harness that extends from the base 2 to the end actuator 12, to a control device 6 (see Fig. 10) configured to control the operation of the robot. The harness is secured to any one of the plurality of arm mechanisms 3 in a manner to extend along the arm mechanism 3.

As described above, each of the distal-end-side link sandwiched portions 29 of the bracket 4 is provided on the outer peripheral edge portion of the bracket 4. This makes it possible to readily form a sufficiently large space for the installation of the end actuator 12 on the upper surface side of the bracket 4.

### [Link Dislocation Detection Unit]

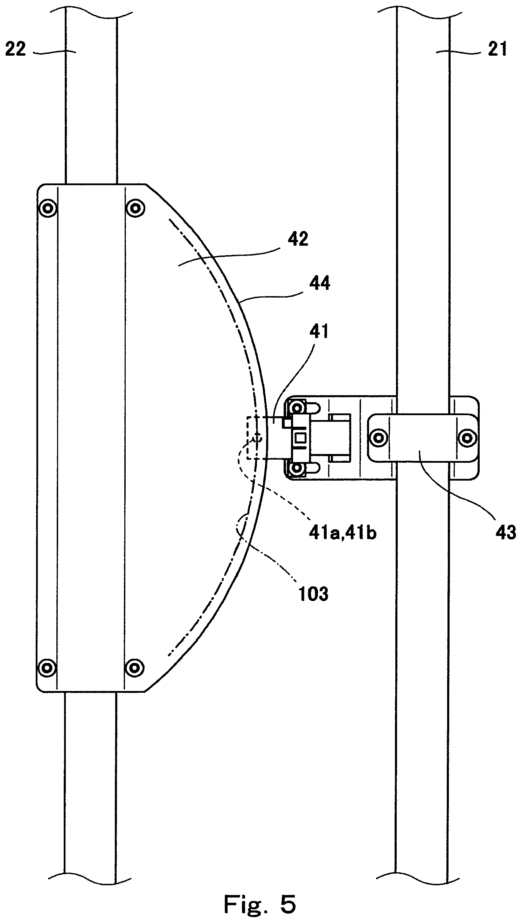

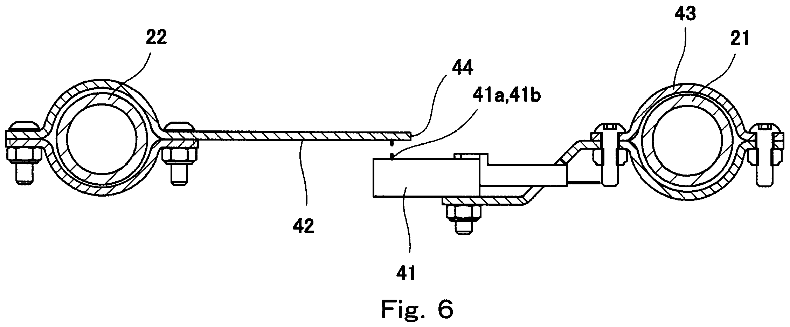

Fig. 5 shows a configuration example of a link dislocation detection unit 5. Fig. 6 also shows a configuration example of the link dislocation detection unit 5, and shows a view of the link dislocation detection unit as seen in the direction in which the first link and the second link extend.

As shown in Fig. 5, the link dislocation detection unit 5 is mounted to a portion of the parallel link unit 19 between the proximal end portion and the distal end portion thereof, i.e., mounted to the middle portion of the parallel link unit 19. In the present embodiment, the link dislocation detection unit 5 is mounted at a substantially central position of the parallel link unit 19 in the direction in which the parallel link unit 19 extends. However, the mounting position of the link dislocation detection unit 5 is not thus limited. Alternatively, the mounting position of the link dislocation detection unit 5 may be shifted toward the distal end or the proximal end from the central position of the parallel link unit 19 in the direction in which the parallel link unit 19 extends. The link dislocation detection unit 5 is a reflective photoelectric sensor, for example. The link dislocation detection unit 5 includes: a light emitting and receiving module 41, in which a light emitter 41a configured to emit light and a light receiver 41b (detector) configured to receive the light emitted by the light emitter 41a are integrated; and a reflector 42 configured to reflect the light emitted by the light emitter 41a of the light emitting and receiving module 41. The light emitting and receiving module 41 is supported by a support 43 fixed to the middle portion of the first link 21. The light emitter 41a and the light receiver 41b are disposed in a gap between the middle portion of the first link 21 and the middle portion of the second link 22.

As described above, when the bracket 4 moves within the movable range 195 to the predetermined position defined by the plurality of arm mechanisms 3, the first link 21 moves relative to the second link 22 in the axial direction of the second link 22. In addition, the first link 21 and the second link 22 swing on the plane that passes through the first link 21 and the second link 22, and the distance between the first link 21 and the second link 22 in the direction orthogonal to the extending direction of the first link 21 and the second link 22 changes. As a result, as shown in Fig. 5, Fig. 7A, and Fig. 7B, the light emitter 41a and the light receiver 41b of the light emitting and receiving module 41 mounted to the first link 21 draw an arc-shaped movement trajectory 103, the position of which is defined by the second link 22 and which is in the shape of an arc that swells from the second link 22 toward the first link 21. It should be noted that since the parallel link unit 19 is a parallel link, the distance between the first link 21 and the second link 22 in the direction in which the axis 102 and the axis 104 extend do not change. The movement trajectory 103 is a movement trajectory that the light receiver 41b draws when the normally assembled parallel link unit 19 swings, and is a predetermined movement trajectory relative to the second link 22 (the position of the trajectory is defined by a positional relationship between the light receiver 41b and the second link 22).

As shown in Fig. 5, the reflector 42 is a plate-shaped body, and is mounted to the middle portion of the second link 22. An end edge of the reflector 42, the end edge being positioned between the first link 21 and the second link 22, includes an arc-shaped edge portion 44, which is in the shape of an arc that swells from the second link 22 toward the first link 21. The arc-shaped edge portion 44 extends along the arc-shaped movement trajectory 103 on one side of the movement trajectory 103, the one side being shifted from the movement trajectory 103 in a direction from the second link 22 toward the first link 21. That is, the position of the arc-shaped edge portion 44 is slightly shifted from the movement trajectory 103 toward the first link 21.

According to the link dislocation detection unit 5 thus configured, in a state where the parallel link unit 19 is normally assembled to the robot 1, as shown in Fig. 6, the light emitted by the light emitter 41a of the light emitting and receiving module 41 is reflected by a portion of the reflector 42, the portion being inward of the arc-shaped edge portion 44, and the reflected light is received by the light receiver 41b.

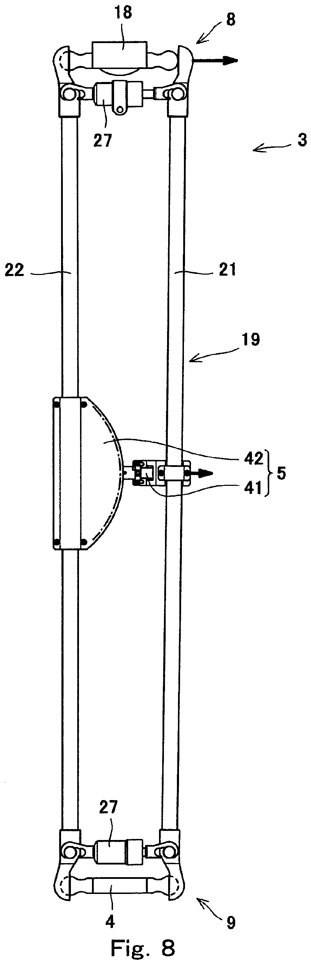

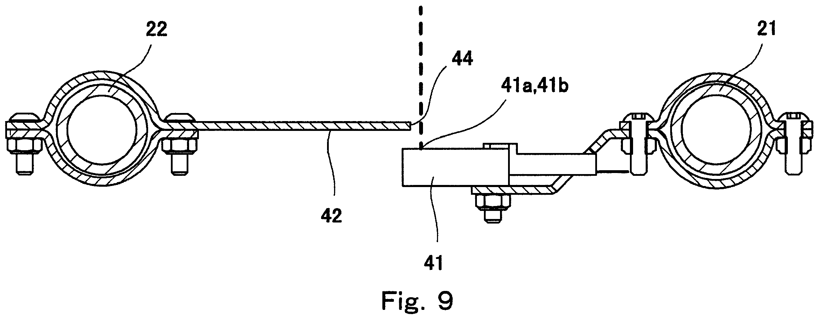

Meanwhile, as shown in Fig. 8, when force against the urging force of the urging unit 27 is exerted, in the proximal end joint 8, the socket 26 of the first link 21 or the second link 22 assembled to the arm 18 may be dislocated from the ball portion 24. In this case, the middle portion of the first link 21 and the middle portion of the second link 22 move away from each other temporarily. As a result, the light emitting and receiving module 41 and the reflector 42 move away from each other in the direction orthogonal to the first link 21 and the second link 22. Then, as shown in Fig. 9, the light emitter 41a and the light receiver 41b of the light emitting and receiving module 41 deviate from the movement trajectory 103, and move outwardly from the arc-shaped edge portion 44 of the reflector 42. Consequently, the light emitted by the light emitter 41a of the light emitting and receiving module 41 is not reflected by the reflector 42, and is not received by the light receiver 41b, accordingly. Based on such a light reception state of the light receiver 41b, i.e., based on the state where the light receiver 41b has stopped receiving the light emitted by the light emitter 41a, the light receiver 41b can detect that the middle portion of the first link 21 and the middle portion of the second link 22 have become spaced apart from each other by more than a predetermined distance. More specifically, the light receiver 41b can detect that the light receiver 41b has moved from the movement trajectory 103 toward the first link 21 away from the second link 22 based on the light reception state of the light receiver 41b, i.e., based on the state where the light receiver 41b has stopped receiving the light emitted by the light emitter 41a.

Further, when force against the urging force of the urging unit 27 is exerted, in the distal end joint 9, the socket 26 of the first link 21 or the second link 22 assembled to the arm 18 may be dislocated from the ball portion 31. In this case, the middle portion of the first link 21 and the middle portion of the second link 22 move away from each other. As a result, similar to the above case, the light receiver 41b can detect that the middle portion of the first link 21 and the middle portion of the second link 22 have become spaced apart from each other by more than the predetermined distance based on the light reception state of the light receiver 41b, i.e., based on the state where the light receiver 41b has stopped receiving the light emitted by the light emitter 41a.

As described above, the light receiver 41b is configured to detect that the middle portion of the first link 21 and the middle portion of the second link 22 have become spaced apart from each other by more than the predetermined distance, and based thereon, an abnormality in the assembled state of the proximal end joint 8 and the distal end joint 9 can be detected.

When the abnormality has occurred in the assembled state of the proximal end joint 8 and the distal end joint 9, regardless of the orientation of the parallel link unit 19, the light emitter 41a and the light receiver 41b of the light emitting and receiving module 41 mounted to the first link 21 immediately deviate from the movement trajectory 103, and move outwardly of the arc-shaped edge portion 44 of the reflector 42. Therefore, the abnormality in the assembled state of the proximal end joint 8 and the distal end joint 9 can be detected accurately.

It should be noted that, as described above, the position of the arc-shaped edge portion 44 is slightly shifted from the movement trajectory 103 toward the first link 21. This makes it possible to prevent a situation where even though the first link 21 and the second link 22 are normally assembled to the arm 18 and the bracket 4, the light emitted by the light emitter 41a of the light emitting and receiving module 41 is not reflected by the reflector 42 due to deflection of the first link 21 and the second link 22, and thereby the light is not received by the light receiver 41b.

Each light emitting and receiving module 41 is connected, by a corresponding unshown harness that extends from the base 2 to the light emitting and receiving module 41, to the control device 6 (see Fig. 10) configured to control the operation of the robot. Each harness extends along the first link 21 of the arm mechanism 3, to which the corresponding light emitting and receiving module 41 is mounted, passes by the proximal end joint 8, further extends along the arm 18, and is attached to the base 2. In this manner, the harness of the light emitting and receiving module 41 is configured not to extend thorough the distal end joint 9. This makes it possible to reduce the risk of snapping of the harness. The light emitting and receiving module 41 outputs information to the control device 6 via a signal cable, the information indicating the light reception state of the light that is emitted by the light emitter 41a and that is to be received by the light receiver 41b.

### [Configuration Example of Controller]

Fig. 10 is a block diagram schematically showing a configuration example of a control system of the robot 1.

The robot 1 includes the control device 6 configured to control the operation of the robot. For example, the control device 6 includes: a controller 61 including an arithmetic unit such as a CPU; and a storage 62 including memories such as a ROM and RAM. The control device 6 may be configured as a single control device performing centralized control, or may be configured as a plurality of control devices performing distributed control in cooperation with each other.

The controller 61 includes an arm controller 63 and an end controller 64. The arm controller 63 controls the driving of the arm actuators 13 of the plurality of arm mechanisms 3 via unshown drivers to swing the arms 18, thereby controlling the operation of the arms 18. The end controller 64 controls the driving of the end actuator 12 via an unshown driver to rotate the rotary shaft 11, thereby rotating the end actuator 12. The arm controller 63 and the end controller 64 are functional blocks that are realized when the controller 61 executes a predetermined control program stored in the storage.

Signals outputted from the light emitting and receiving modules 41 of the plurality of link dislocation detection units 5 are inputted to the controller 61 via signal cables.

According to the robot 1 configured as described above, if at least one link dislocation detection unit 5 detects that the light receiver 41b has stopped receiving the light emitted by the light emitter 41a, then the controller 61 determines that an abnormality has occurred in the assembled state of the proximal end joint 8 and the distal end joint 9 of the arm mechanism 3 corresponding to the link dislocation detection unit 5 that has detected that the light receiver 41b has stopped receiving the light.

Thus, based on the light reception state of the light receivers 41b of the plurality of link dislocation detection units 5, the controller 61 can determine the presence or absence of an abnormality in the assembled state of the joints, the number of which is twice the number of light receivers 41b provided in the robot 1. This makes it possible to simplify the configuration of the robot 1 and obtain high reliability.

When the controller 61 determines that an abnormality has occurred in the proximal end joint 8 and the distal end joint 9, the controller 61 changes the motion of the arm 18 and the end actuator 12, or brings the arm 18 and the end actuator 12 to an emergency stop.

As described above, the robot 1 of the present invention is capable of detecting, by the light receiver 41b of one link dislocation detection unit 5, an abnormality in the assembled state of the proximal end joint 8 and the distal end joint 9 of the corresponding arm mechanism 3. This makes it possible to simplify the configuration of the robot 1 and obtain high reliability.

The link dislocation detection unit 5 of the present invention can be readily added to an existing so-called delta robot.

### <Variation 1>

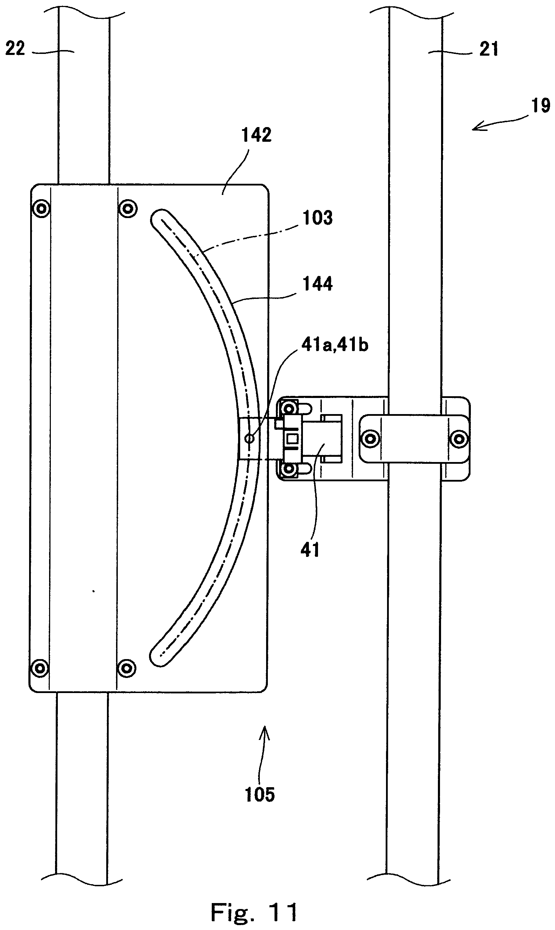

In the above-described embodiment, the reflector 42 is configured to include the arc-shaped edge portion 44, which is in the shape of an arc that swells from the second link 22 toward the first link 21, and the light receiver 41b is configured to detect that the light receiver 41b has moved from the movement trajectory 103 in a direction from the second link 22 toward the first link 21 based on the state where the light receiver 41b has stopped receiving the light emitted by the light emitter 41a. However, the present embodiment is not thus limited. Alternatively, as shown in Fig. 11, a reflector 142 of a link dislocation detection unit 105 may be configured to include an arc-shaped hole 144, which is in the shape of an arc that swells from the second link 22 toward the first link 21, and the link dislocation detection unit 105 may be configured to detect that the link dislocation detection unit 5 has moved from the movement trajectory 103 in a direction from the second link 22 toward the first link 21 based on a state where the light receiver 41b has started receiving the light emitted by the light emitter 41a.

### <Variation 2>

In the above-described embodiment, a reflective photoelectric sensor is used to detect that the middle portion of the first link 21 and the middle portion of the second link 22 have become spaced apart from each other by more than the predetermined distance. However, the present embodiment is not thus limited. Alternatively, for example, a limit switch or a proximity switch may be used instead of the reflective photoelectric sensor.

### <Variation 3>

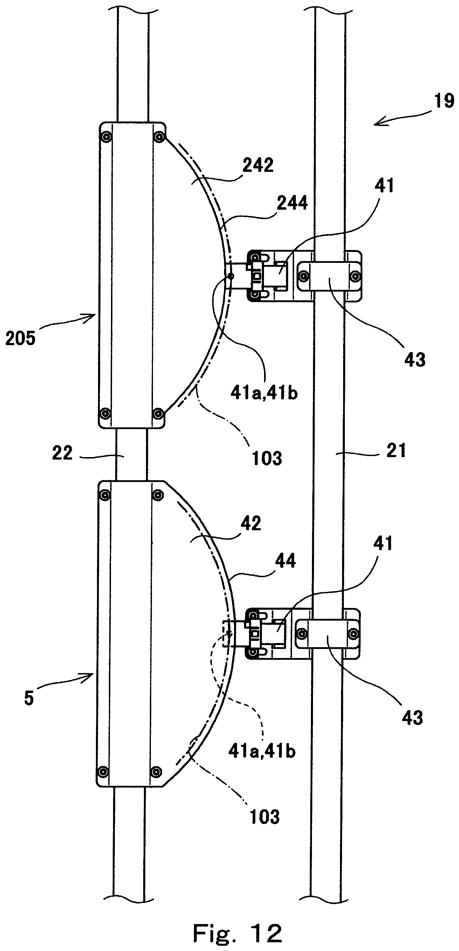

In the above-described embodiment, each parallel link unit 19 is provided with the link dislocation detection unit 5 configured to detect that the middle portion of the first link 21 and the middle portion of the second link 22 have become spaced apart from each other by more than the predetermined distance. Additionally, as shown in Fig. 12, each parallel link unit 19 may be provided with a second link dislocation detection unit 205 configured to detect that the middle portion of the first link 21 and the middle portion of the second link 22 have become closer to each other such that the distance therebetween is less than the predetermined distance. Specifically, the second link dislocation detection unit 205 may be provided on the middle portion of each parallel link unit 19, and an arc-shaped edge portion 244 of a reflector 242 of the second link dislocation detection unit 205 may be configured to extend along the movement trajectory 103 on one side of the movement trajectory 103, the one side being shifted from the movement trajectory 103 in a direction from the first link 21 toward the second link 22. The light receiver 41b of the second link dislocation detection unit 205 may be configured to detect that the light receiver 41b has moved from the movement trajectory 103 in a direction from the first link 21 toward the second link 22 based on a state where the light receiver 41b has started receiving the light emitted by the light emitter 41a of the second link dislocation detection unit 205.

From the foregoing description, numerous modifications and other embodiments of the present invention are obvious to a person skilled in the art. Therefore, the foregoing description should be interpreted only as an example and is provided for the purpose of teaching the best mode for carrying out the present invention to a person skilled in the art. The structural and/or functional details may be substantially altered without departing from the spirit of the present invention.

### Reference Signs List

1 robot
2 base
3 arm mechanism
4 bracket
5 link dislocation detection unit
6 control device
8 proximal end joint
9 distal end joint
10 end effector
11 rotary shaft
12 end actuator
13 arm actuator
15 bucket
15a upper edge portion
16 cover
17 rib
18 arm
19 parallel link unit
20 proximal-end-side link sandwiched portion
21 first link
22 second link
23 joint portion
24 ball portion
25 recess
26 socket
27 urging unit
29 distal-end-side link sandwiched portion
30 joint portion
31 ball portion
41 light emitting and receiving module
41a light emitter
41b light receiver
42 reflector
43 support
44 arc-shaped edge portion
61 controller
62 storage
63 arm controller
64 end controller
101 central axis
102 axis
103 movement trajectory
104 axis
191 mount
191a mounting opening
191b peripheral edge portion
192 placing stand
193 workpiece
194 workspace
195 movable range
196 one position
197 another position

## Claims

1. A robot comprising:
a base;
a bracket that includes three distal-end-side link sandwiched portions and to which an end effector is attached;
a plurality of arm mechanisms that couple between the base and the bracket, each arm mechanism including
an arm whose proximal end portion is swingably coupled to the base and whose distal end portion includes a proximal-end-side link sandwiched portion,
a pair of links parallel to each other, the pair of links being disposed such that the proximal-end-side link sandwiched portion is rotatably sandwiched between proximal end portions of the respective links, and such that a corresponding one of the distal-end-side link sandwiched portions is rotatably sandwiched between distal end portions of the respective links, and
an urging unit connecting between the pair of links in a bridging manner and configured to urge the pair of links toward each other;
a link dislocation detection unit mounted to the pair of links; and
a controller configured to control an operation of the arm, wherein
the proximal-end-side link sandwiched portion and the proximal end portions of the pair of links form a proximal end joint that couples the pair of links to the arm in a manner to allow the pair of links to swing,
the distal end portions of the pair of links and the distal-end-side link sandwiched portion form a distal end joint that couples the pair of links to the bracket in a manner to allow the pair of links to swing, and
the link dislocation detection unit includes a detector mounted to a middle portion of one of the pair of links, the detector being configured to detect that the middle portion of the one of the pair of links and a middle portion of the other one of the pair of links have become spaced apart from each other by more than a predetermined distance.

2. The robot according to claim 1, wherein
the link dislocation detection unit is configured to detect that the detector has deviated from a predetermined movement trajectory that the detector draws relative to the other one of the pair of links when the pair of links in a normally assembled state swings on a plane that passes through the pair of links.

3. The robot according to claim 2, wherein
the link dislocation detection unit further includes:
a light emitter configured to emit light; and
a reflector mounted to the other one of the pair of links and configured to reflect the light emitted by the light emitter, wherein
the reflector includes an end edge that extends along the predetermined trajectory on one side of the predetermined trajectory, the one side being shifted from the predetermined trajectory in a direction from the other one of the pair of links toward the one of the pair of links, and
the detector is configured to receive the light that is emitted by the light emitter and reflected by the reflector.

4. The robot according to any one of claims 1 to 3, wherein
the controller changes motion of the arm mechanism, or brings the arm mechanism to a stop, when the detector detects that the middle portions of the pair of links have become spaced apart from each other by more than the predetermined distance.
